# EUROPÄISCHE PATENTSCHRIFT

(11) **EP 1 078 937 B1**
(45) Veröffentlichungstag und Bekanntmachung des Hinweises auf die Patenterteilung: **15.08.2007**
(21) Anmeldenummer: 00117271.7
(22) Anmeldetag: 16.08.2000
(51) Int. Cl.: C08F 8/34

(54) **Verfahren zur Herstellung von monodispersen, vernetzten Perlpolymerisaten mit Thioharnstoffgruppen und ihre Verwendung zur Adsorption von Metallverbindungen**
Process for the preparation of monodisperse crosslinked bead polymers containing thiourea groups and their use for adsorbing metal compounds
Procédé de préparation de polymères en perles réticulés et monodispersés contenant des groupements thiourée et leur application à l'adsorption de composés métalliques

(30) Priorität: 27.08.1999 DE 19940865; 12.11.1999 DE 19954402
(43) Veröffentlichungstag der Anmeldung: 28.02.2001
(73) Patentinhaber: LANXESS Deutschland GmbH, 51369 Leverkusen (DE)
(72) Erfinder: Klipper, Reinhold, Dr., 50933 Köln (DE); Strüver, Werner, Dr., 51375 Leverkusen (DE); Schnegg, Ulricg, Dr., 51377 Leverkusen (DE); Hoffmann, Heiko, 51427 Bergisch Gladbach (DE); Mauer, Dieter, Dr., 51381 Leverkusen (DE); Lehmann, Bernhard, 52072 Aachen (DE); Hees, Bruno, 40764 Langenfeld (DE); Lütjens, Holger, Dr., 51065 Köln (DE)

(56) Entgegenhaltungen:
- EP-A- 0 547 720
- WO-A-86/05499
- DD-A- 212 256
- DD-A- 224 038
- DE-A- 2 429 944
- FR-A- 2 222 389
- US-A- 2 418 941
- US-A- 3 847 841
- US-A- 3 882 053
- US-A- 3 892 689

## Beschreibung

Gegenstand der vorliegenden Erfindung ist ein Verfahren zur Herstellung von neuen, monodispersen, vernetzten Perlpolymerisaten mit Thioharnstoffgruppen und ihre Verwendung zur Adsorption von Metallverbindungen insbesondere Schwer- und Edelmetallverbindungen.

Aus US-A 4 444 961 ist ein Verfahren zur Herstellung monodisperser, makroporöser Chelatharze bekannt. Hierbei werden haloalkylierte Polymere aminiert und das aminierte Polymere mit Chloressigsäure zu Chelatharzen vom Iminodiessigsäuretyp umgesetzt.

Bisher nicht bekannt und daher Gegenstand der vorliegenden Erfindung sind monodisperse Perlpolymerisate, insbesondere monodisperse Chelatharze, die mit Thiohamstoffgruppen funktionalisiert sind, ein Verfahren zu ihrer Herstellung sowie deren Verwendung.

Überraschenderweise zeigen die monodispersen Chelatharze mit Thiohamstoffgruppen eine deutlich höhere Aufnahmekapazität für Metallverbindungen, insbesondere von Schwer- und Edelmetallverbindungen, als die aus der US-A 4 444 961 bekannten monodispersen, makroporösen Chelatharze. Infolgedessen verbessert sich das Schlupfverhalten im Harz, was zu kleineren Restmengen an Metallen im Eluat führt. Das bessere Aufnahmevermögen für Schwer- und Edelmetallverbindungen zeigt sich besonders bei Elementen der Platingruppe, bei zweiwertigen Ionen aus wäßrigen Salzlösungen oder Säuren, insbesondere bei Edelmetallen wie Rhodium, Gold oder Silber oder Edelmetall-enthaltenden Katalysatorresten.

Mit den erfindungsgemäßen Chelatharzen können aber nicht nur wäßrige Salzlösungen und Säuren von Metall-Restmengen gereinigt werden. Die erfindungsgemäßen Chelatharze finden ebenso Anwendung in organischen Lösungsmitteln oder Lösungen von flüssigen oder gasförmigen Kohlenwasserstoffen oder Halogenkohlenwasserstoffen, insbesondere chlorierten oder fluorierten Kohlenwasserstoffen.

Zur Entfernung von Metallionen aus flüssigen Lösungen werden Ionenaustauscher, die diese Ionen selektiv aufnehmen - sogenannte Selektivharze - in der Praxis eingesetzt.

Die Aufarbeitung von Prozeßströmen und Abwässern speziell der Galvano- und Oberflächentechnik, sowie von Abwässern der chemischen Industrie und der Elektronikindustrie, gewinnt auch weiterhin immer mehr an Bedeutung. Sie ist eine wesentliche Voraussetzung für den Fortbestand zahlreicher Anlagen.

Ein zentraler Gesichtspunkt der Aufarbeitung dieser wäßrigen oder organischen Abwässer bzw. Flüssigkeiten, aber auch von Deponie-Sickerwässern und Grundwässern ist eine möglichst weitgehende Entfernung von Metallionen, insbesondere Schwermetallionen wie beispielsweise Quecksilber-, Eisen-, Kupfer-, Nickel-, Arsen-Ionen, oder zumindest deren Entfernung bis auf sehr kleine Restkonzentrationen.

Bei der Naßrauchgaswäsche von Müllverbrennungsanlagen und Kohlekraftwerken fallen salzreiche Abwässer an, die erhebliche Mengen an Schwermetallionen enthalten. Moderne Verbrennungsanlagen arbeiten mit einer zweistufigen Wäsche zur getrennten Adsorption von Salzsäure bei pH <1 und SO₂ im alkalischen Bereich (Vater, An, Jekel, Wasser, Abwasser 132,1991,10 Seite 565).

Im sauren Wäscher fallen salzsäurehaltige Lösungen an, die mit einer Reihe von Schwermetallen kontaminiert sind. In der salzsauren Lösung des Wäschers liegt Quecksilber ionogen gelöst vor. Da in vielen Fällen eine Salzsäuregewinnung aus dem Rauchgaswaschwasser angestrebt wird, muß Quecksilber möglichst weitgehend hieraus entfernt werden .Die bis jetzt hierzu eingesetzten makroporösen, heterodispersen Perlpolymerisate mit Thioharnstoffgruppen, bekannt aus DE-A 2 429 944, sind hierzu nicht in ausreichendem Maße in der Lage. Daher werden neuartige Polymere mit verbesserten Eigenschaften benötigt. Hier zeigen die erfindungsgemäßen mit Thioharnstoffgruppen funktionalisierten Polymere hervorragende Reinigungswirkungen.

In der EP-A 0 422 480 wird ein Verfahren zur teilweisen Entfernung von Spurenelementen aus Kohlenwasserstoffgemischen beschrieben. Eingesetzt werden hierzu heterodisperse Perlpolymerisate mit Thioharnstoffgruppen.

Es ist aber auch bekannt, daß Schwermetalle und ihre Verbindungen nicht nur in wäßrigen Systemen, sondern auch in der Natur in vielen organischen Flüssigkeiten und Gasen auftreten. So enthalten Erdgase und Erdgaskondensate, Erdöle und generell aus fossilen Quellen stammende flüssige und gasförmige Kohlenwasserstoffe Schwermetalle und ihre Verbindungen wie Quecksilber, Eisen, Nickel, Phosphor, Arsen und andere.

In der petrochemischen Industrie werden Erdöle und Erdgase aus unterschiedlichen Herkunftsorten in zahlreichen verschiedenen Verfahrensstufen weiter verarbeitet.

Dazu gehören unter anderem Destillationschritte, Steamcracken oder katalytisches Cracken oder Hydrierungen.

Hierbei werden in vielen Fällen Katalysatoren auf der Basis von Edelmetallen wie Platin, Palladium, Rhodium und anderen eingesetzt.

Die Wirkungsweise dieser Katalysatoren ist in erheblichem Maße abhängig von der Abwesenheit anderer Metall- bzw. Schwermetallverbindungen, wie Arsen oder Quecksilberverbindungen. Die Gegenwart dieser Stoffe kann die Wirkungsweise der Katalysatoren drastisch vermindern und sie vergiften. Man spricht von Katalysatorgiften.

Quecksilber ist ein korrosives Metall, das durch Amalgambildung in Leitungen und Apparaturen generell korrodierend wirkt und erhebliche Korrosionsschäden hervorrufen kann.

Es besteht also die Notwendigkeit Metall bzw. Schwermetallverbindungen auch aus Kohlenwasserstoffgemischen zu entfernen. Die bis jetzt hierzu eingesetzten makroporösen, heterodispersen Perlpolymerisate mit Thioharnstoffgruppen sind nicht in ausreichendem Maße hierzu in der Lage. Die erfindungsgemäßen monodispersen thioharnstoffgruppenhaltigen Polymere zeigen hier deutlich verbesserte Eigenschaften.

Für das Recycling von Quecksilber aus dem Abwasser der Alkalichloridelektrolyse und die Reinigung dieser Abwässer werden Kombinationen von Anionenaustauschern und thioharnstoffgruppenhaltigen, makroporösen, heterodispersen Perlpolymerisaten eingesetzt. Gemäß DE-A 2 249 472 wird das zuletzt genannte Polymere zur Feinreinigung eingesetzt.

Auch für diese Anwendung zeigen die erfindungsgemäßen monodispersen thioharnstoffgruppenhaltigen Polymere verbesserte Eigenschaften. Diese reduzieren deutlich Schwermetalle und ihre Verbindungen aus wäßrigen Lösungen, aber auch wie oben beschrieben, aus organischen Flüssigkeiten und Dämpfen.

Gegenstand der vorliegenden Erfindung ist ein Verfahren zur Herstellung monodisperser, vernetzter Perlpolymerisate mit Thioharnstoffgruppen, dadurch gekennzeichnet, daß man
a) Monomertröpfchen aus mindestens einer monovinylaromatischen Verbindung und mindestens einer polyvinylaromatischen Verbindung sowie gegebenenfalls einem Porogen und/oder gegebenenfalls einem Initiator oder einer Initiatorkombination, zu einem monodispersen, vernetzten Perlpolymerisat umsetzt,
b) dieses monodisperse, vernetzte Perlpolymerisat mit Phthalimidderivaten amidomethyliert,
c) das amidomethylierte Perlpolymerisat zu aminomethyliertem Perlpolymerisat umsetzt und
d) das aminomethylierte Perlpolymerisat mit Thioharnstoff, substituiertem Thioharnstoff oder Salzen der Thiocyansäure reagieren lässt, wobei als monodispers Stoffe bezeichnet werden, bei denen mindestens 90 Volumen-oder Massen-% der Teilchen eines Durchmesser besitzen, der in dem Intervall mit der Breite von ± 10 % des häufigsten Durchmessers um den häufigsten Durchmesser herum liegt.

Überraschenderweise zeigen die gemäß vorliegender Erfindung hergestellten monodispersen, thioharnstoffgruppenhaltigen vernetzten Perlpolymerisate
- eine deutlich bessere Entfernung von Schwermetallen und Edelmetallen aus wässrigen Lösungen oder organischen Flüssigkeiten oder deren Dämpfen, besonders von Quecksilber aus wässrigen Lösungen von Erdalkalien und Alkalien, insbesondere eine Entfernung von Quecksilber aus Solen der Alkalichloridelektrolyse,
- eine deutlich bessere Entfernung von Schwermetallen, insbesondere Quecksilber und Arsen, aus wässrigen Salzsäuren insbesondere aus Abwässern von Rauchgaswäschen, aber auch aus Deponie-Sickerwässern und Grundwässern,
- eine deutlich bessere Entfernung von Schwermetallen, insbesondere Quecksilber und Arsen und Edelmetallen, aus flüssigen oder gasförmigen Kohlenwasserstoffen wie Erdgasen, Erdgaskondensaten und Erdölen oder Halogen-Kohlenwasserstoffen wie Chlor- oder Fluorkohlenwasserstoffen,
- eine deutlich bessere Entfernung von Elementen der Platingruppe sowie Gold oder Silber aus wässrigen oder organischen Lösungen, sowie
- eine deutlich bessere Entfernung von Rhodium oder Elementen der Platingruppe sowie Gold oder Silber oder Rhodium oder Edelmetall-enthaltende Katalysatorreste aus organischen Lösungen oder Lösemitteln,
als die aus dem Stand der Technik bekannten Polymerisate.

Die erfindungsgemäßen monodispersen, Thioharnstoffgruppen-enthaltenden Perlpolymerisate eignen sich deshalb hervorragend für die verschiedensten Einsatzgebiete in der chemischen Industrie, der Elektronik-Industrie, der Abfall-Entsorgungs/Verwertungs-Industrie oder der Galvano- oder Oberflächentechnik.

Das monodisperse, vernetzte, vinylaromatische Grundpolymerisat gemäß Verfahrensschritt a) kann nach den aus der Literatur bekannten Verfahren hergestellt werden. Beispielsweise werden solche Verfahren in US-A 4 444 961, EP-A 0 046 535, US-A 4 419 245 oder WO 93/12167 beschrieben, deren Inhalte von der vorliegenden Anmeldung hinsichtlich des Verfahrensschrittes a) mit umfaßt werden.

In Verfahrensschritt a) wird mindestens eine monovinylaromatische Verbindung und mindestens eine polyvinylaromatische Verbindung eingesetzt. Es ist jedoch auch möglich, Mischungen zweier oder mehrerer monovinylaromatischer Verbindungen und Mischungen zweier oder mehrerer polyvinylaromatischer Verbindungen einzusetzen.

Als monovinylaromatische Verbindungen im Sinne der vorliegenden Erfindung werden in Verfahrensschritt a) bevorzugt monoethylenisch ungesättigte Verbindungen wie beispielsweise Styrol, Vinyltoluol, Ethylstyrol, α-Methylstyrol, Chlorstyrol, Chlormethylstyrol, Acrylsäurealkylester und Methacrylsäurealkylester eingesetzt.

Besonders bevorzugt wird Styrol oder Mischungen aus Styrol mit den vorgenannten Monomeren eingesetzt.

Bevorzugte polyvinylaromatische Verbindungen im Sinne der vorliegenden Erfindung sind für Verfahrensschritt a) multifunktionelle ethylenisch ungesättigte Verbindungen wie beispielsweise Divinylbenzol, Divinyltoluol, Trivinylbenzol, Divinylnaphtalin, Trivinylnaphtalin, 1,7-Octadien, 1,5-Hexadien, Ethylenglycoldimethacrylat, Trimethylolpropantrimethacrylat oder Allylmethacrylat.

Die polyvinylaromatischen Verbindungen werden im allgemeinen in Mengen von 1-20 Gew.-%, vorzugsweise 2-12 Gew.-%, besonders bevorzugt 4-10 Gew.-%, bezogen auf das Monomer oder dessen Mischung mit weiteren Monomeren eingesetzt. Die Art der polyvinylaromatischen Verbindungen (Vernetzer) wird im Hinblick auf die spätere Verwendung des kugelförmigen Polymerisats ausgewählt. Divinylbenzol ist in vielen Fällen geeignet. Für die meisten Anwendungen sind kommerzielle Divinylbenzolqualitäten, die neben den Isomeren des Divinylbenzols auch Ethylvinylbenzol enthalten, ausreichend.

In einer bevorzugten Ausführungsform der vorliegenden Erfindung kommen in Verfahrensschritt a) mikroverkapselte Monomertröpfchen zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane, Polyharnstoffe.

Als natürliches Polyamid ist beispielsweise Gelatine besonders gut geeignet. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP-A 0 046 535 eingehend beschrieben. Die Methoden der Verkapselung mit synthetischen Polymeren sind bekannt. Gut geeignet ist beispielsweise die Phasengrenzflächenkondensation, bei der eine im Monomertröpfchen gelöste Reaktivkomponente (beispielsweise ein Isocyanat oder ein Säurechlorid) mit einer zweiten, in der wäßrigen Phase gelösten Reaktivkomponente (beispielsweise einem Amin), zur Reaktion gebracht wird.

Die gegebenenfalls mikroverkapselten Monomertröpfchen enthalten gegebenenfalls einen Initiator oder Mischungen von Initiatoren zur Auslösung der Polymerisation. Für das erfindungsgemäße Verfahren geeignete Initiatoren sind beispielsweise Peroxyverbindungen wie Dibenzoylperoxid, Dilaurylperoxid, Bis (p-chlorbenzoylperoxid), Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-etylhexan sowie Azoverbindungen wie 2,2'-Azobis(isobutyronitril) oder 2,2'-Azobis(2-methylisobutyronitril).

Die Initiatoren werden im allgemeinen in Mengen von 0,05 bis 2,5 Gew.%, vorzugsweise 0,1 bis 1,5 Gew.%, bezogen auf die Monomeren-Mischung, angewendet.

Als weitere Zusätze in den gegebenenfalls mikroverkapselten Monomertröpfchen können gegebenenfalls Porogene verwendet werden, um im kugelförmigen Polymerisat eine makroporöse Struktur zu erzeugen. Hierfür sind organische Lösungsmittel geeignet, die das entstandene Polymerisat schlecht lösen bzw. quellen. Beispielhaft seien Hexan, Octan, Isooctan, Isododecan, Methylethylketon, Butanol oder Octanol und deren Isomeren genannt.

Die Begriffe mikroporös oder gelförmig bzw. makroporös sind in der Fachliteratur bereits eingehend beschrieben worden.

Bevorzugte Perlpolymerisate im Sinne der vorliegenden Erfindung, hergestellt durch Verfahrensschritt a), weisen eine makroporöse Struktur auf.

Als monodispers werden in der vorliegenden Anmeldung solche Stoffe bezeichnet, bei denen mindestens 90 Volumen- oder Massen-% der Teilchen einen Durchmesser besitzen, der in dem Intervall mit der Breite von ± 10 % des häufigsten Durchmessers um den häufigsten Durchmesser herum liegt.

Zum Beispiel bei einem Stoff mit häufigstem Durchmesser von 0,5 mm liegen mindestens 90 Volumen- oder Massen-% in einem Größenintervall zwischen 0,45 mm und 0,55 mm, bei einem Stoff mit häufigstem Durchmesser von 0,7 mm liegen mindestens 90 Volumen- oder Massen-% in einem Größenintervall zwischen 0,77 mm und 0,63 mm.

Die Ausbildung monodisperser, makroporöser Perlpolymerisate kann beispielsweise durch Zusatz von Inertmaterialien (Porogene) zu der Monomermischung bei der Polymerisation erfolgen. Als solche sind vor allem organische Substanzen geeignet, die sich im Monomeren lösen, das Polymerisat aber schlecht lösen bzw. quellen (Fällmittel für Polymere) beispielsweise aliphatische Kohlenwasserstoffe (Farbenfabriken Bayer DBP 1045102 , 1957; DBP 1113570 , 1957) .

In US-A 4 382 124 werden als Porogen beispielsweise Alkohole mit 4 bis 10 Kohlenstoffatomen zur Herstellung monodisperser, makroporöser Perlpolymerisate auf Styrol/Divinylbenzol-Basis eingesetzt. Ferner wird eine Übersicht der Herstellmethoden makroporöser Perlpolymerisate gegeben.

Das gegebenenfalls mikroverkapselte Monomertröpfchen kann gegebenenfalls auch bis zu 30 Gew.% (bezogen auf das Monomer) vernetztes oder unvernetztes Polymer enthalten. Bevorzugte Polymere leiten sich aus den vorgenannten Monomeren, besonders bevorzugt von Styrol, ab.

Die mittlere Teichengröße der gegebenenfalls verkapselten Monomertröpfchen beträgt 10 - 1000 µm, vorzugsweise 100 - 1000 µm. Das erfindungsgemäße Verfahren ist auch zur Herstellung monodisperser kugelförmiger Polymerisate gut geeignet.

Bei der Herstellung der monodispersen Perlpolymerisate gemäß Verfahrensschritt a) kann die wäßrige Phase gegebenenfalls einen gelösten Polymerisationsinhibitor enthalten. Als Inhibitoren im Sinne der vorliegenden Erfindung kommen sowohl anorganische als auch organische Stoffe in Frage. Beispiele für anorganische Inhibitoren sind Stickstoffverbindungen wie Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere geeignete organische Inhibitoren sind stickstoffhaltige Verbindungen. Hierzu gehören Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate wie beispielsweise N,N-Hydrazinodiessigsäure, Nitrosoverbindungen wie beispielsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors beträgt 5 - 1000 ppm (bezogen auf die wäßrige Phase), vorzugsweise 10 - 500 ppm, besonders bevorzugt 10 - 250 ppm.

Die Polymerisation der gegebenenfalls mikroverkapselten Monomertröpfchen zum kugelförmigen, monodispersen Perlpolymerisat erfolgt, wie bereits oben erwähnt, gegebenenfalls in Anwesenheit eines oder mehrerer Schutzkolloide in der wäßrigen Phase. Als Schutzkolloide eignen sich natürliche oder synthetische wasserlösliche Polymere, wie beispielsweise Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern. Sehr gut geeignet sind auch Cellulosederivate, insbesondere Celluloseester und Celluloseether, wie Carboxymethylcellulose, Methylhydroxyethylcellulose, Methylhydroxypropylcellulose und Hydroxyethylcellulose. Besonders gut geeignet ist Gelatine. Die Einsatzmenge der Schutzkolloide beträgt im allgemeinen 0,05 bis 1 Gew.-% bezogen auf die wäßrige Phase, vorzugsweise 0,05 bis 0,5 Gew.-%.

Die Polymerisation zum kugelförmigen, monodispersen, makroporösen Perlpolymerisat in Verfahrensschritt a) kann gegebenenfalls auch in Anwesenheit eines Puffersystems durchgeführt werden. Bevorzugt werden Puffersysteme, die den pH-Wert der wäßrigen Phase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflußt. Besonders gut geeignete Puffersysteme im Sinne der vorliegenden Erfindung enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phoshats bzw. Borats in der wäßrigen Phase beträgt 0,5 - 500 mmol/1, vorzugsweise 2,5 - 100 mmol/1.

Die Rührgeschwindigkeit bei der Polymerisation ist weniger kritisch und hat im Gegensatz zur herkömmlichen Perlpolymerisation keinen Einfluß auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wäßriger Phase beträgt 1 : 0,75 bis 1 : 20, vorzugsweise 1 : 1 bis 1 : 6.

Die Polymerisationstemperatur richtet sich nach der Zerfallstemperatur des eingesetzten Initiators. Sie liegt im allgemeinen zwischen 50 bis 180°C, vorzugsweise zwischen 55 und 130°C. Die Polymerisation dauert 0,5 bis einige Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise läßt sich beispielsweise die Forderung nach sicherem Reaktionsverlauf und hohem Polymerisationsumsatz sehr gut erfüllen. Nach der Polymerisation wird das Polymerisat mit üblichen Methoden, beispielsweise durch Filtrieren oder Dekantieren, isoliert und gegebenenfalls gewaschen.

Im Verfahrensschritt b) wird zunächst das Amidomethylierungsreagens hergestellt. Dazu wird beispielsweise Phthalimid oder ein Phthalimidderivat in einem Lösungsmittel gelöst und mit Formalin versetzt. Anschließend wird unter Wasserabspaltung hieraus ein Bis-(phthalimido)ether gebildet. Der Bis-(phthalimido)ether kann gegebenenfalls zum Phthalimidoester umgesetzt werden. Bevorzugte Phthalimidderivate im Sinne der vorliegenden Erfindung sind Phthalimid selber oder substituierte Phthalimide, beispielsweise Methylphthalimid.

Als Lösungsmittel kommen im Verfahrensschritt b) inerte Lösungsmittel zum Einsatz, die geeignet sind, das Polymer zu quellen, bevorzugt chlorierte Kohlenwasserstoffe, besonders bevorzugt Dichlorethan oder Methylenchlorid.

Im Verfahrensschritt b) wird das Perlpolymerisat mit Phthalimidderivaten kondensiert. Als Katalysator wird hierbei Oleum, Schwefelsäure oder Schwefeltrioxid eingesetzt.

Die Abspaltung des Phthalsäurerestes und damit die Freilegung der Aminomethylgruppe erfolgt im Verfahrensschritt c) durch Behandeln des phthalimidomethylierten vernetzten Perlpolymerisates mit wäßrigen oder alkoholischen Lösungen eines Alkalihydroxids, wie Natriumhydroxid oder Kaliumhydroxid bei Temperaturen zwischen 100 und 250°C, vorzugsweise 120 -190°C. Die Konzentration der Natronlauge liegt im Bereich von 10 bis 50 Gew.-%, vorzugsweise 20 bis 40 Gew.-%. Dieses Verfahren ermöglicht die Herstellung aminoalkylgruppenhaltiger vernetzter Perlpolymerisate mit einer Substitution der aromatischen Kerne größer 1.

Das dabei entstehende aminomethylierte Perlpolymerisat wird schließlich mit vollentsalztem Wasser alkalifrei gewaschen.

Im Verfahrensschritt d) erfolgt die Herstellung der erfindungsgemäßen Polymere durch Umsetzung des Aminomethylgruppen-haltigen monodispersen, vernetzten, vinylaromatischen Grundpolymerisates in Suspension mit Thioharnstoff oder substituiertem Thioharnstoff oder Salzen der Thiocyansäure.

Besonders bevorzugt werden Thioharnstoff oder Salze der Thiocyansäure eingesetzt.

Als Suspensionsmedium werden Mineralsäuren eingesetzt, bevorzugt wäßrige Salzsäure in Konzentrationen zwischen 10 und 40 Gew.-%, bevorzugt 20 bis 35 Gew.- %.

Weiterhin Gegenstand der vorliegenden Erfindung sind die nach dem erfindungsgemäßen Verfahren hergestellten monodispersen Perlpolymerisate mit Thioharnstoffgruppen.

Bevorzugt entstehen durch das erfindungsgemäße Verfahren monodisperse Perlpolymerisate mit den funktionellen Gruppen, die sich während des Verfahrensschritts d) ausbilden: 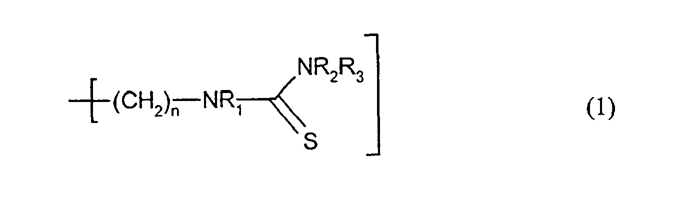 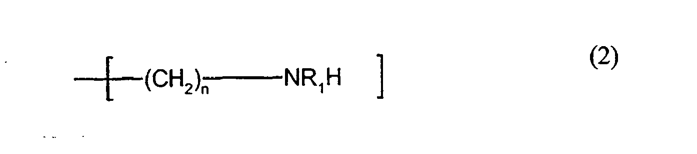 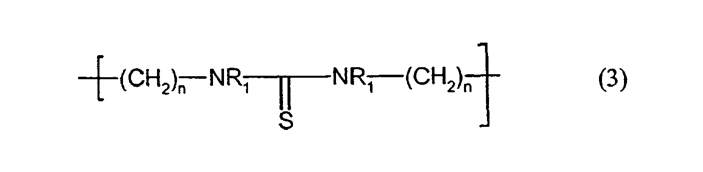 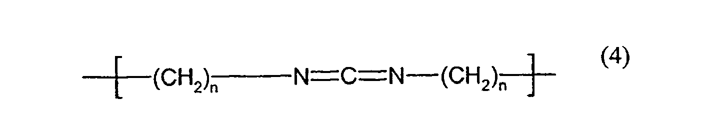 worin
- R₁: für Wasserstoff oder eine Alkylgruppe steht,
- R₂: für Wasserstoff oder eine Alkylgruppe steht,
- R₃: für Wasserstoff oder eine Alkylgruppe steht und
- n: für eine ganze Zahl 1 bis 5, besonders bevorzugt 1, steht.

In den Resten R₁, R₂ und R₃ steht Alkyl jeweils bevorzugt für C₁-C₆-Alkyl.

In den erfindungsgemäßen monodispersen Perlpolymerisaten mit Thioharnstoffgruppen trägt jeder aromatische Kern bevorzugt 0,1 bis 2 der oben genannten funktionellen Gruppen (1), (2), (3) oder (4).

Bevorzugt beträgt der Anteil der einzelnen funktionellen Gruppen in der Summe der funktionellen Gruppen insgesamt
30 bis 80 % (1)
5 bis 30 % (2)
1 bis 95 % (3)
1 bis 5 % (4).

Die erfindungsgemäß hergestellten thioharnstoffgruppenhaltigen, vernetzten Perlpolymerisate eignen sich zur Adsorbtion von Metallen, insbesondere Schwermetallen und Edelmetallen und ihren Verbindungen aus wäßrigen Lösungen und organischen Flüssigkeiten. Die erfindungsgemäß hergestellten thioharnstoffgruppenhaltigen, vernetzten Perlpolymerisate eignen sich besonders zur Entfernung von Schwermetallen oder Edelmetallen aus wäßrigen Lösungen, insbesondere aus wäßrigen Lösungen von Erdalkalien oder Alkalien, aus Solen der Alkalichloridelektrolyse, aus wäßrigen Salzsäuren, aus Abwässern oder Rauchgaswäschen, aber auch aus flüssigen oder gasförmigen Kohlenwasserstoffen, Erdgasen, Erdgaskondensaten, Erdölen oder Halogenkohlenwasserstoffen, wie Chlor- oder Fluorkohlenwasserstoffen oder Fluor/Chlor-Kohlenwasserstoffen.

Ganz besonders geeignet sind die erfindungsgemäß hergestellten thioharnstoffgruppenhaltigen, vernetzten Perlpolymerisate zur Entfernung von Quecksilber, Elementen der Platingruppe sowie Gold oder Silber aus den oben aufgeführten Lösungen, Flüssigkeiten oder Gasen.

Insbesondere eignen sich die erfindungsgemäßen Perlpolymerisate zur Entfernung von Rhodium oder Elementen der Platingruppe sowie Gold, Silber oder Rhodium oder Edelmetall-enthaltende Katalysatorreste aus organischen Lösungen oder Lösemitteln.

### Beispiele

### Beispiel 1

### 1a) Herstellung des monodispersen, makroporösen Perlpolymerisates auf der Basis von Styrol, Divinylbenzol und Ethylstyrol

In einem 10 l Glasreaktor werden 3000 g vollentsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25 °C temperiert. Unter Rühren wird anschließend eine Mischung aus 3200 g von mikroverkapselten Monomertröpfchen mit enger Teilchengrößenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure besteht, und 3200 g wäßriger Phase mit einem pH-Wert von 12 zugesetzt. Die mittlere Teilchengröße der Monomertöpfchen beträgt 460 µm.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 µm-Sieb gewaschen und anschließend im Vakuum bei 80°C getrocknet. Man erhält 1893 g eines kugelförmigen Polymerisates mit einer mittleren Teilchengröße von 440 µm, enger Teilchengrößenverteilung und glatter Oberfläche.

Das Polymerisat ist in der Aufsicht kreidig weiß und weist eine Schüttdichte von ca. 370 g/l auf.

### 1b) Herstellung des amidomethylierten Perlpolymerisates

Bei Raumtemperatur werden 2373 g Dichlorethan, 705 g Phthalimid und 505 g 29,2 gew.-%iges Formalin vorgelegt .Der pH Wert der Suspension wird mit Natronlauge auf 5,5 bis 6 eingestellt.Anschließend wird das Wasser destillativ entfernt. Dann werden 51,7 g Schwefelsäure zudosiert. Das entstehende Wasser wird destillativ entfernt. Der Ansatz wird abgekühlt. Bei 30°C werden 189 g 65 %iges Oleum und anschließend 371,4 g monodisperses Perlpolymerisat, hergestellt nach Verfahrensschritt a) aus Beispiel 1 eindosiert. Die Suspension wird auf 70°C erhitzt und weitere 6 Stunden bei dieser Temperatur gerührt. Die Reaktionsbrühe wird abgezogen, vollentsalztes Wasser wird hinzudosiert und Restmengen an Dichlorethan werden destillativ entfernt.

Ausbeute an amidomethyliertem Perlpolymerisat : 2140 ml
Elementaranalytische Zusammensetzung:

| | |
|---|---|
| Kohlenstoff: | 75,3 Gew. %; |
| Wasserstoff: | 4,9 Gew. %; |
| Stickstoff: | 5,8 Gew. %; |
| Rest: | Sauerstoff; |

### 1 c) Herstellung des aminomethylierten Perlpolymerisates

Zu 2100 ml amidomethyliertem Perlpolymerisat werden 1019 g 45 gew.-%ige Natronlauge und 406 ml vollentsalztes Wasser bei Raumtemperatur zudosiert. Die Suspension wird auf 180°C erhitzt und 6 Stunden bei dieser Temperatur gerührt.

Das erhaltene Perlpolymerisat wird mit vollentsalztem Wasser gewaschen.
Ausbeute an aminomethyliertem Perlpolymerisat : 1770 ml
Als Gesamtausbeute - hochgerechnet - ergeben sich 1804 ml
Elementaranalytische Zusammensetzung : Stickstoff : 11,75 Gew. %

Aus der elementaranalytischen Zusammensetzung des aminomethylierten Perlpolymerisates läßt sich errechnen, daß im statistischen Mittel pro aromatischem Kern - herrührend aus den Styrol und Divinylbenzoleinheiten - 1,17 Wasserstoffatome durch Aminomethylgruppen substituiert wurden.

### 1d) Herstellung des monodispersen Harzes mit Thioharnstoffgruppen

### Einsatzstoffe:

In einem 4 Liter Autoklav werden bei Raumtemperatur 1132 ml vollentsalztes Wasser vorgelegt. Dazu dosiert man 1700 ml aminomethyliertes Perlpolymerisat aus Schritt c), 470 g 30 gew.- %ige Salzsäure und 485 g Thioharnstoff.

Die Suspension wird 30 Minuten bei Raumtemperatur gerührt. Anschließend wird der Autoklav in 2 Stunden auf 145°C erhitzt. Bei 145°C wird weitere 15 Stunden gerührt.

### Aufarbeiten des Ansatzes:

Der Ansatz wird abgekühlt und entspannt.
Die überstehende Flüssigkeit wird abgezogen. Das erhaltene Perlpolymerisat wird nacheinander mit 4 gew.-%iger Natronlauge und schließlich mit vollentsalztem Wasser gewaschen.

Ausbeute: 1652ml

Elementaranalysen:

10,4 Gew. % Stickstoff

10,2 Gew. % Schwefel

### Beispiel 2

Die Entfernung von Quecksilber aus wäßrigen, Natriumchlorid-enthaltenden Lösungen mit thioharnstoffgruppenhaltigen, makroporösen, monodispersen Perlpolymerisaten
2a) In eine Glassäule werden 100 ml des nach Beispiel 1 hergestellten thiohamstoffgruppenhaltigen, makroporösen, monodispersen Perlpolymerisats eingefüllt. Die Glassäulen werden auf 60°C Innentemperatur erhitzt. Über das Harz werden pro Stunde 1000 ml einer wäßrigen Natriumchloridsole folgender Zusammensetzung filtriert: 300 g Natriumchlorid pro Liter Sole, 20 mg Quecksilber pro Liter Sole. Die Sole wird mit Natronlauge auf einen pH Wert von 9,2 eingestellt und auf 60°C temperiert.
   Im Ablauf wird die Menge an Quecksilber bestimmt. Nach Filtration von 785 Litern Sole über das Harz werden im Ablauf 2 mg Quecksilber pro Liter Ablauf analysiert. Das Harz hat insgesamt 154 g Quecksilber aufgenommen.
2b) In einem Vergleichsversuch werden in eine Glassäule 100 ml thioharnstoffgruppenhaltiges, makroporöses, heterodisperses Perlpolymerisat hergestellt nach DE-A 2 429 944 eingefüllt und unter gleichen Bedingungen wie in Beispiel 2a) beschrieben mit Sole beaufschlagt. Nach Filtration von 625 Litern Sole über das Harz werden im Ablauf 2 mg Quecksilber pro Liter Ablauf analysiert. Das Harz hat insgesamt 124 g Quecksilber aufgenommen.

Beispiel 2 zeigt eine deutliche Überlegenheit in der Aufnahme von Quecksilber aus einer wäßrigen Natriumchlorid-Lösung für erfindungsgemäße thioharnstoffgruppenhaltige, makroporöse, monodisperse Perlpolymerisate im Vergleich zu einem heterodispersen Perlpolymerisat, wie es aus der DE-A 2 429 944 bekannt ist.

### Beispiel 3

Die Entfernung von Quecksilber aus wäßriger Salzsäure mit thioharnstoffgruppenhaltigen, makroporösen, monodispersen Perlpolymerisaten
3a) In eine Glassäule werden 50 ml des nach Beispiel 1 hergestellten thiohamstoffgruppenhaltigen, makroporösen, monodispersen Perlpolymerisats eingefüllt. Bei Raumtemperatur werden pro Stunde 500 ml 10 gew.-%ige wäßrige Salzsäure, die 26 mg Quecksilber pro Liter enthält, filtriert. Im Ablauf wird die Restmenge an Quecksilber analysiert. Nach 180 Litern filtrierter Salzsäure wird im Ablauf eine Menge an 2 mg Quecksilber pro Liter Ablauf bestimmt. Das Harz hat insgesamt 92,8 g Quecksilber pro Liter Harz aufgenommen.
3b) In einem Vergleichsversuch wird in einer Glassäule 50 ml thioharnstoffgruppenhaltiges, makroporöses, heterodisperses Perlpolymerisat, hergestellt nach DE-A 2 429 944, eingefüllt und unter gleichen Bedingungen wie in Beispiel 3a) beschrieben mit 10 gew.-%iger Salzsäure beaufschlagt. Nach Filtration von 134 Litern 10 gew.-%iger Salzsäure wird im Ablauf eine Menge von 2 mg Quecksilber pro Liter Ablauf analysiert. Das Harz hat insgesamt 68,9 g Quecksilber pro Liter Harz aufgenommen.

Auch für saure Lösungen zeigt sich eine deutliche Überlegenheit der erfindungsgemäßen thioharnstoffgruppenhaltigen, monodispersen Perlpolymerisate in der Adsorption von Quecksilber im Vergleich zu einem heterodispersen Perlpolymerisat gemäß DE-A 2 429 944.

Sowohl Beispiel 2 als auch Beispiel 3 zeigen, daß die erfindungsgemäßen Perlpolymerisate nicht nur höheren Durchsatz in Litern, sondern auch höhere Aufnahme an Quecksilber aufweisen, bis im Eluat 2 mg Quecksilber pro Liter Ablauf gemessen werden. Diese Werte können mit heterodispersen, thioharnstoffgruppenhaltigen Perlpolymerisaten gemäß dem Stand der Technik DE-A 2 429 944 und EP-A 0 422 480 nicht erzielt werden.

## Patentansprüche

1. Verfahren zur Herstellung monodisperser, vernetzter Perlpolymerisate mit Thioharnstoffgruppen, **dadurch gekennzeichnet, daß** man
a) Monomertröpfchen aus mindestens einer monovinylaromatischen Verbindung und mindestens einer polyvinylaromatischen Verbindung zu einem monodispersen, vernetzten Perlpolymerisat umsetzt,
b) dieses monodisperse, vernetzte Perlpolymerisat mit Phthalimidderivaten amidomethyliert,
c) das amidomethylierte Perlpolymerisat zu aminomethyliertem Perlpolymerisat umsetzt und
d) das aminomethylierte Perlpolymerisat mit Thioharnstoff, substituiertem Thioharnstoff oder Salzen der Thiocyansäure reagieren lässt, wobei als monodisperse Stoffe bezeichnet werden, bei denen mindestens 90 Volumen- oder Massen-% der Teilchen einen Durchmesser besitzen, der in dem Intervall mit der Breite von ± 10 % des häufigsten Durchmessers um den häufigsten Durchmesser herum liegt.

2. Verfahren gemäß Anspruch 1, **dadurch gekennzeichnet, daß** die Monomertröpfchen mit einem Komplexkoazervat mikroverkapselt werden.

3. Verfahren gemäß Anspruch 2, **dadurch gekennzeichnet, daß** Verfahrensschritt a) in Gegenwart eines Schutzkolloids durchgeführt wird.

4. Verfahren gemäß der Ansprüche 1 bis 3, **dadurch gekennzeichnet, daß** Verfahrensschritt a) in Gegenwart mindestens eines Initiators durchgeführt wird.

5. Verfahren gemäß der Ansprüche 1 bis 3, **dadurch gekennzeichnet, daß** die Monomertröpfchen Porogene enthalten und nach der Polymerisation makroporöse, vernetzte Perlpolymerisate bilden.

6. Verfahren gemäß der Ansprüche 1 bis 5, **dadurch gekennzeichnet, daß** in Verfahrensschritt a) ein Polymerisationsinhibitor eingesetzt wird.

7. Verfahren gemäß Anspruch 3, **dadurch gekennzeichnet, daß** als Schutzkolloide Gelatine, Stärke, Polyvinylalkohol, Polyvinylpyrrolidon, Polyacrylsäure, Polymethacrylsäure oder Copolymerisate aus (Meth)acrylsäure oder (Meth)acrylsäureester eingesetzt werden.

8. Verfahren gemäß Anspruch 1, **dadurch gekennzeichnet, daß** als monovinylaromatische Verbindungen monoethylenisch ungesättigte Verbindungen eingesetzt werden.

9. Verfahren gemäß Anspruch 1, **dadurch gekennzeichnet, daß** als polyvinylaromatische Verbindungen Divinylbenzol, Divinyltoluol, Trivinylbenzol, Divinylnaphthalin, Trivinylnaphthalin, 1,7-Octadien, 1,5-Hexadien, Ethylenglycoldimethacrylat, Trimethylolpropantrimethacrylat oder Allylmethacrylat eingesetzt werden.

10. Verfahren gemäß Anspruch 4, **dadurch gekennzeichnet, daß** als Initiator Peroxyverbindungen wie Dibenzoylperoxid, Dilaurylperoxid, Bis-(p-chlorbenzoyl)peroxid, Dicyclohexylperoxydicarbonat, tert.-Butylperoctoat, tert.-Butylperoxy-2-ethyl-hexanoat, 2,5-Bis-(2-ethylhexanoylperoxy)-2,5-dimethylhexan oder tert.-Amylperoxy-2-ethylhexan, sowie Azoverbindungen wie 2,2'-Azobis(isobutyronitril) oder 2,2'-Azobis-(2-methylisobutyronitril) eingesetzt werden.

11. Verfahren gemäß Anspruch 1, **dadurch gekennzeichnet, daß** in Verfahrensschritt b) zunächst ein Phthalimidoether gebildet wird.

12. Verfahren gemäß Anspruch 11, **dadurch gekennzeichnet, daß** der Phthalimidoether aus Phthalimid oder seinen Derivaten und Formalin hergestellt wird.

13. Verfahren gemäß der Ansprüche 11 und 12, **dadurch gekennzeichnet, daß** die Reaktion des Phthalimidoethers mit dem Perlpolymerisat in Gegenwart von Oleum, Schwefelsäure oder Schwefeltrioxid stattfindet.

14. Monodisperse Perlpolymerisate, **dadurch gekennzeichnet, dass** diese mit Thioharnstoffgruppen funktionalisiert sind, wobei als monodispers Stoffe bezeichnet werden, bei denen mindestens 90 Volumen- oder Massen-% der Teilchen einen Durchmesser besitzen, der in dem Intervall mit der Breite von ± 10 % des häufigsten Durchmessers um den häufigsten Durchmesser hierum liegt.

15. Monodisperse Perlpolymerisate gemäß der Ansprüche 14, **dadurch gekennzeichnet, daß** diese eine makroporöse Struktur aufweisen.

16. Monodisperse Perlpolymerisate gemäß den Ansprüchen 14 oder 17, **dadurch gekennzeichnet, daß** diese die funktionellen Gruppen 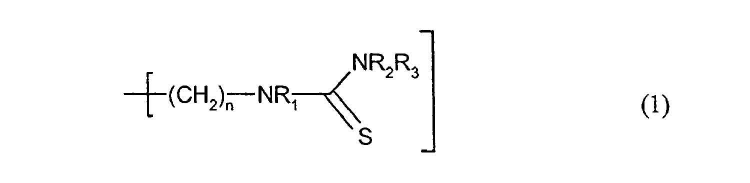 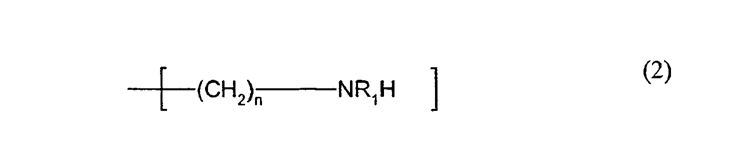 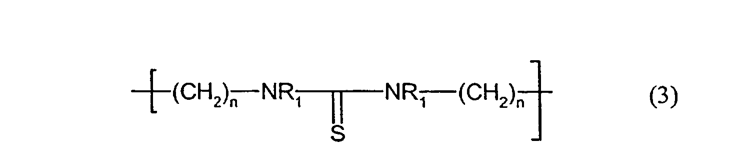 oder 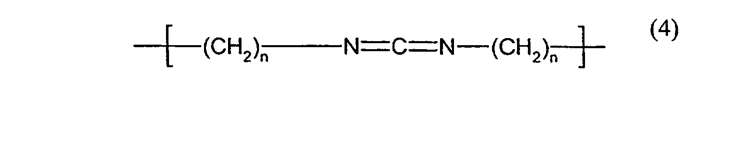 worin
R₁ für Wasserstoff oder eine Alkylgruppe steht,
R₂ für Wasserstoff oder eine Alkylgruppe steht,
R₃ für Wasserstoff oder eine Alkylgruppe steht und
n für eine ganze Zahl 1 bis 5 steht,
aufweisen.

17. Verwendung der monodispersen, thioharnstoffgruppenhaltigen, vernetzten Perlpolymerisate gemäß der Ansprüche 14 bis 16 zur Entfernung von Schwermetallen oder Edelmetallen aus wässrigen Lösungen von Erdalkalien oder Alkalien oder deren Dämpfen, aus Solen der Alkalichloridelektrolyse, aus wäßrigen Salzsäuren, aus Abwässern oder Rauchgaswäschen, Grundwässern oder Deponieabwässern, aus flüssigen oder gasförmigen Kohlenwasserstoffen, Erdgasen, Erdgaskondensaten, Erdölen, sowie aus flüssigen oder gasförmigen Halogenkohlenwasserstoffen.

18. Verwendung der Perlpolymerisate gemäß der Ansprüche 14 bis 16, **dadurch gekennzeichnet, daß** als Schwermetalle oder Edelmetalle Quecksilber, Elemente der Platingruppe, Gold oder Silber entfernt werden.

19. Verwendung von Perlpolymerisaten gemäß der Ansprüche 14 bis 16 zur Entfernung von Rhodium oder Elementen der Platingruppe sowie Gold, Silber oder Rhodium oder Edelmetall-enthaltende Katalysatorresten aus organischen Lösungen oder Lösemitteln.

20. Verfahren zur Entfernung von Schwermetallen oder Edelmetallen aus wäßrigen Lösungen oder Dämpfen, wäßrigen Lösungen von Erdalkalien oder Alkalien, Solen der Alkalichloridelektrolyse, wäßrigen Salzsäuren, Abwässem oder Rauchgaswäschen, Grundwässern oder Deponieabwässern, flüssigen oder gasförmigen Kohlenwasserstoffen oder flüssigen oder gasförmigen Halogenkohlenwasserstoffen, **dadurch gekennzeichnet, daß** man Perlpolymerisate gemäß der Ansprüche 14 bis 16 einsetzt.

21. Verfahren gemäß Anspruch 20, **dadurch gekennzeichnet, daß** als Schwermetalle oder Edelmetalle Quecksilber, Elemente der Platingruppe, Gold oder Silber entfernt werden.

22. Verfahren zur Entfernung von Rhodium oder Elementen der Platingruppe sowie Gold, Silber, Rhodium oder Edelmetall-enthaltende Katalysatorreste aus organischen Lösungen oder Lösungsmitteln, **dadurch gekennzeichnet, daß** man Perlpolymerisate gemäß der Ansprüche 14 bis 16 einsetzt.

23. Verwendung der Perlpolymerisate gemäß der Ansprüche 14 bis 16 in der chemischen Industrie, der Elektronik-Industrie, der Galvano- und Oberflächenindustrie oder der Abfall Entsorgungs- oder Verwertungsindustrie.

## Claims

1. Process for preparing monodisperse, crosslinked bead polymers having thiourea groups, **characterized in that**
a) monomer droplets made from at least one monovinylaromatic compound and from at least one polyvinylaromatic compound are reacted to give a monodisperse, crosslinked bead polymer,
b) this monodisperse, crosslinked bead polymer is amidomethylated with phthalimide derivatives,
c) the amidomethylated bead polymer is reacted to give an aminomethylated bead polymer, and
d) the aminomethylated bead polymer is allowed to react with thiourea, with substituted thiourea or with salts of thiocyanic acid, where substances which are monodisperse are those for which the diameter of at least 90% by volume or by weight of the particles varies from the most frequent diameter by not more than ± 10% of the most frequent diameter.

2. Process according to Claim 1, **characterized in that** the monomer droplets are microencapsulated using a complex coacervate.

3. Process according to Claim 2, **characterized in that** process step a) is carried out in the presence of a protective colloid.

4. Process according to Claims 1 to 3, **characterized in that** process step a) is carried out in the presence of at least one initiator.

5. Process according to Claims 1 to 3, **characterized in that** the monomer droplets comprise porogens and, after the polymerization, form macroporous, crosslinked bead polymers.

6. Process according to Claims 1 to 5, **characterized in that** a polymerization inhibitor is used in process step a).

7. Process according to Claim 3, **characterized in that** the protective colloids used comprise gelatine, starch, polyvinyl alcohol, polyvinylpyrrolidone, polyacrylic acid, polymethacrylic acid or copolymers made from (meth)acrylic acid or (meth)acrylate.

8. Process according to Claim 1, **characterized in that** the monovinylaromatic compounds used comprise monoethylenically unsaturated compounds.

9. Process according to Claim 1, **characterized in that** the polyvinylaromatic compounds used comprise divinylbenzene, divinyltoluene, trivinylbenzene, divinylnaphthalene, trivinylnaphthalene, 1,7-octadiene, 1,5-hexadiene, ethylene glycol dimethacrylate, trimethylolpropane trimethacrylate or allyl methacrylate.

10. Process according to Claim 4, **characterized in that** the initiator used comprises peroxy compounds, such as dibenzoyl peroxide, dilauroyl peroxide, bis-(p-chlorobenzoyl) peroxide, dicyclohexyl peroxydicarbonate, tert-butyl peroctoate, tert-butyl peroxy-2=ethyl-hexanoate, 2,5-bis-(2-ethylhexanoyl-peroxy)-2,5-dimethylhexane or tert-amylperoxy-2-ethylhexane, or else azo compounds, such as 2,2'-azobis(isobutyronitrile) or 2,2'-azobis-(2-methyl-isobutyronitrile).

11. Process according to Claim 1, **characterized in that** a phthalimido ether is first formed in process step b).

12. Process according to Claim 11, **characterized in that** the phthalimido ether is prepared from phthalimide or from its derivatives and formalin.

13. Process according to Claims 11 and 12, **characterized in that** the reaction of the phthalimido ether with the bead polymer takes place in the presence of oleum, sulphuric acid or sulphur trioxide.

14. Monodisperse bead polymers, **characterized in that** they have been functionalized with thiourea groups, where substances which are monodisperse are those for which the diameter of at least 90% by volume or by weight of the particles varies from the most frequent diameter by not more than ± 10% of the most frequent diameter.

15. Monodisperse bead polymers according to Claim 14, **characterized in that** they have a macroporous structure.

16. Monodisperse bead polymers according to Claim 14 or 15, **characterized in that** they have the functional groups 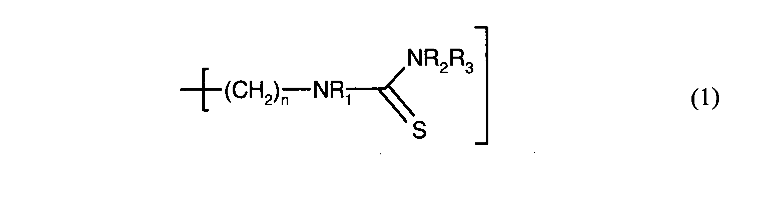 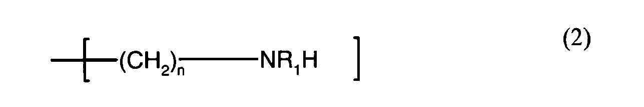 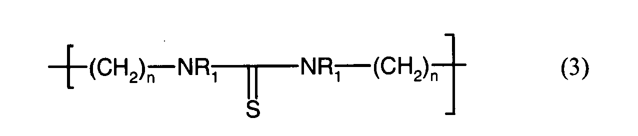 or 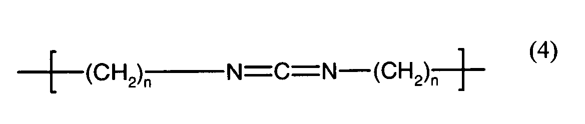 where
R₁ is hydrogen or an alkyl group,
R₂ is hydrogen or an alkyl group,
R₃ is hydrogen or an alkyl group, and
n is an integer from 1 to 5.

17. Use of the monodisperse crosslinked bead polymers according to Claims 14 to 16 and containing thiourea groups for removing heavy metals or noble metals from aqueous solutions of alkaline earth metals or alkali metals or vapours of these, from saline solutions arising in alkali metal chloride electrolysis, from aqueous hydrochloric acids, from waste water or flue gas scrubber effluent, from groundwater or landfill run-off water, from liquid or gaseous hydrocarbons, natural gases, natural gas condensates, mineral oils, or else from liquid or gaseous halogenated hydrocarbons.

18. The use of the bead polymers according to Claims 14 to 16, **characterized in that** the heavy metals or noble metals removed comprise mercury, elements of the platinum group, gold or silver.

19. Use of bead polymers according to Claims 14 to 16 for removing rhodium or elements of the platinum group, or else gold or silver or rhodium- or noble-metal-containing catalyst residues from organic solutions or solvents.

20. Process for removing heavy metals or noble metals from aqueous solutions or vapours, aqueous solutions of alkaline earth metals or alkali metals, saline solutions from alkali metal chloride electrolysis, aqueous hydrochloric acids, from waste water or flue gas scrubber effluent, from groundwater or landfill run-off water, from liquid or gaseous hydrocarbons, or else from liquid or gaseous halogenated hydrocarbons, **characterized in that** use is made of bead polymers according to Claims 14 to 16.

21. Process according to Claim 20, **characterized in that** the heavy metals or noble metals removed comprise mercury, elements of the platinum group, gold or silver.

22. Process for removing rhodium or elements of the platinum group, or else gold or silver or rhodium- or noble-metal-containing catalyst residues from organic solutions or solvents, **characterized in that** use is made of bead polymers according to Claims 14 to 16.

23. Use of the bead polymers according to Claims 14 to 16 in the chemical industry, the electronics industry, the electroplating and surface finishing industry or in industries which dispose of or recycle waste.

## Revendications

1. Procédé pour la préparation de polymères en perles, monodispersés, réticulés avec des groupes thiourée, **caractérisé en ce qu'**on
a) transforme des gouttes de monomère constituées par au moins un composé aromatique à fonctionnalité monovinyle et au moins un composé aromatique à fonctionnalité polyvinyle en un polymère en perles, monodispersé, réticulé,
b) amidométhyle ce polymère en perles, monodispersé, réticulé avec des dérivés phtalimide,
c) transforme le polymère en perles amidométhylé en polymère en perles aminométhylé et
d) laisse réagir le polymère en perles aminométhylé avec de la thio-urée, de la thio-urée substituée ou des sels de l'acide thiocyanique, les substances étant appelées monodispersées lorsque au moins 90% en volume ou en masse des particules présentent un diamètre qui se situe dans l'intervalle présentant une largeur de +/- 10% du diamètre le plus fréquent autour du diamètre le plus fréquent.

2. Procédé selon la revendication 1, **caractérisé en ce que** les gouttes de monomère sont micro-encapsulées avec un coacervat complexe.

3. Procédé selon la revendication 2, **caractérisé en ce que** l'étape de procédé a) est réalisée en présence d'un colloïde de protection.

4. Procédé selon les revendications 1 à 3, **caractérisé en ce que** l'étape de procédé a) est réalisée en présence d'au moins un initiateur.

5. Procédé selon les revendications 1 à 3, **caractérisé en ce que** les gouttes de monomère contiennent des agents porogènes et forment, après la polymérisation, des polymères en perles, macroporeux, réticulés.

6. Procédé selon les revendications 1 à 5, **caractérisé en ce qu'**on utilise dans l'étape de procédé a) un inhibiteur de polymérisation.

7. Procédé selon la revendication 3, **caractérisé en ce qu'**on utilise comme colloïde de protection de la gélatine, de l'amidon, du poly(alcool vinylique), de la polyvinylpyrrolidone, du poly(acide acrylique), du poly(acide méthacrylique) ou des copolymères d'acide (méth)acrylique ou des esters de l'acide (méth)acrylique.

8. Procédé selon la revendication 1, **caractérisé en ce qu'**on utilise comme composés aromatiques à fonctionnalité monovinyle des composés monoéthyléniquement insaturés.

9. Procédé selon la revendication 1, **caractérisé en ce qu'**on utilise comme composés aromatiques à fonctionnalité polyvinyle du divinylbenzène, du divinyltoluène, du trivinylbenzène, du divinylnaphtalène, du trivinylnaphtalène, du 1,7-octadiène, du 1,5-hexadiène, du diméthacrylate d'éthylèneglycol, du triméthacrylate de triméthylolpropane ou du méthacrylate d'allyle.

10. Procédé selon la revendication 4, **caractérisé en ce qu'**on utilise comme initiateur des composés peroxy, tels que le peroxyde de dibenzoyle, le peroxyde de dilauryle, le bis(peroxyde de p-chlorobenzoyle), le peroxydicarbonate de dicyclohexyle, le peroctoate de tert-butyle, le peroxy-2-éthylhexanoate de tert-butyle, le 2,5-bis-(2-éthylhexanoylperoxy)-2,5-diméthylhexane ou le tert-amylperoxy-2-éthylhexane, ainsi que des composés azo tels que le 2,2'-azobis(isobutyronitrile) ou le 2,2'-azobis(2-méthylisobutyronitrile).

11. Procédé selon la revendication 1, **caractérisé en ce qu'**on forme d'abord un phtalimidoéther dans l'étape de procédé b).

12. Procédé selon la revendication 11, **caractérisé en ce que** le phtalimidoéther est préparé à partir de phtalimide ou ses dérivés et de formaline.

13. Procédé selon les revendications 11 et 12, **caractérisé en ce que** la réaction du phtalimidoéther avec le polymère en perles a lieu en présence d'oléum, d'acide sulfurique ou de trioxyde de soufre.

14. Polymères en perles, monodispersés, **caractérisés en ce qu'**ils sont fonctionnalisés par des groupes thiourée, les substances étant appelées monodispersées lorsqu'au moins 90% en volume ou en masse des particules présentent un diamètre qui se situe dans l'intervalle présentant une largeur de +/-10% du diamètre le plus fréquent autour du diamètre le plus fréquent.

15. Polymères en perles, monodispersés selon la revendication 14, **caractérisés en ce qu'**ils présentent une structure macroporeuse.

16. Polymères en perles, monodispersés selon les revendications 14 ou 15, **caractérisés en ce qu'**ils présentent les groupes fonctionnels 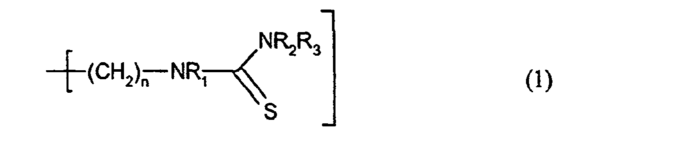 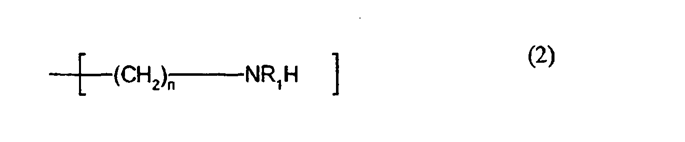 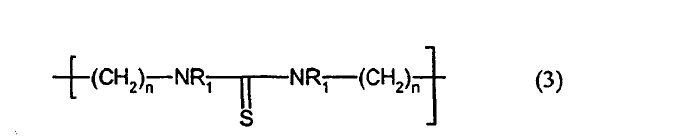 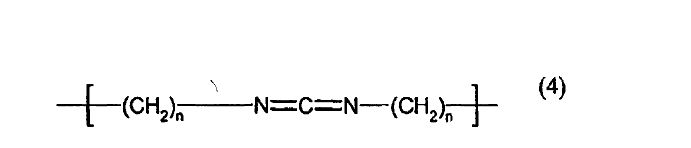 où
R₁ représente hydrogène ou un groupe alkyle,
R₂ représente hydrogène ou un groupe alkyle,
R₃ représente hydrogène ou un groupe alkyle, et
n vaut un nombre entier de 1 à 5.

17. Utilisation des polymères en perles, monodispersés, contenant des groupes thio-urée, réticulés, selon les revendications 14 à 16 pour l'élimination de métaux lourds ou de métaux précieux de solutions aqueuses de métaux alcalins ou alcalino-terreux ou leurs vapeurs, de sols provenant de l'électrolyse de chlorures de métal alcalin, d'acides chlorhydriques aqueux, d'eaux usées ou d'eaux de lavage de gaz de fumée, d'eaux souterraines ou d'eaux usées de décharges, d'hydrocarbures liquides ou gazeux, de gaz naturels, de condensats de gaz naturel, de pétroles ainsi que d'hydrocarbures halogénés liquides ou gazeux.

18. Utilisation des polymères en perles selon les revendications 14 à 16, **caractérisée en ce qu'**on élimine, comme métaux lourds ou métaux précieux, le mercure, les éléments du groupe du platine, l'or ou l'argent.

19. Utilisation des polymères en perles selon les revendications 14 à 16 pour l'élimination de rhodium ou d'éléments du groupe du platine ainsi que de résidus de catalyseur contenant de l'or, de l'argent ou du rhodium ou des métaux précieux de solutions ou de solvants organiques.

20. Procédé pour l'élimination de métaux lourds ou de métaux précieux de solutions aqueuses ou de vapeurs, de solutions aqueuses de métaux alcalino-terreux ou alcalins, de sols provenant de l'électrolyse de chlorures de métaux alcalins, d'acides chlorhydriques aqueux, d'eaux usées ou d'eaux de lavage de gaz de fumée, d'eaux souterraines ou d'eaux usées de décharge, d'hydrocarbures liquides ou gazeux ou d'hydrocarbures halogénés liquides ou gazeux, **caractérisé en ce qu'**on utilise les polymères en perles selon les revendications 14 à 16.

21. Procédé selon la revendication 20, **caractérisé en ce qu'**on élimine, comme métaux lourds ou métaux précieux, le mercure, les éléments du groupe du platine, l'or ou l'argent.

22. Procédé pour l'élimination de rhodium ou d'éléments du groupe du platine ainsi que de résidus de catalyseur contenant de l'or, de l'argent ou du rhodium ou des métaux précieux de solutions ou de solvants organiques, **caractérisé en ce qu'**on utilise des polymères en perles selon les revendications 14 à 16.

23. Utilisation des polymères en perles selon les revendications 14 à 16 dans l'industrie chimique, électronique, galvanique et de surface ou dans l'industrie d'élimination de déchets ou de recyclage de déchets.
